Europäisches Patentamt

European Patent Office

Office européen des brevets

(19)

(11) Veröffentlichungsnummer: **0 000 735**

**B1**

(12) **EUROPÄISCHE PATENTSCHRIFT**

(21) Anmeldenummer: **78100514.5**

(22) Anmeldetag: **26.07.78**

(51) Int. Cl.³: **A 61 G 15/00,**
**G 05 B 19/40**

(54) Einrichtung zur Steuerung eines motorisch verstellbaren zahnärztlichen Behandlungsstuhles.

(30) Priorität: **11.08.77 DE 2736276**

(43) Veröffentlichungstag der Anmeldung:
**21.02.79 Patentblatt 79/4**

(45) Bekanntmachung des Hinweises auf die Patenterteilung:
**18.03.81 Patentblatt 81/11**

(84) Benannte Vertragsstaaten:
**DE FR GB SE**

(56) Entgegenhaltungen:
**DE - B - 2 412 550**
**DE - A - 2 418 909**
**DE - A - 2 554 059**

**IBM TECHNICAL DISCLOSURE BULLETIN,
Jahrgang 8, Heft 4, September '65, New York,
L. THOMPSON "Stepping motor control" Seiten
520—521**

**SCHWEISSEN UND SCHNEIDEN, Jahrgang 17,
Heft 3, März 1965, Deutscher Verlag für
Schweißtechnik, Düsseldorf,
W. MASING "Numerische Steuerungen von
Widerstandsschweißmaschinen", Seiten
108—113**

(73) Patentinhaber: **SIEMENS AKTIENGESELLSCHAFT
Berlin und München
Postfach 22 02 61
D-8000 München 22 (DE)**

(72) Erfinder: **Hohmann, Eugen
Am Leimenberg 32
D-6140 Bensheim (DE)**

Courier Press, Leamington Spa, England.

# Einrichtung zur Steuerung eines motorisch verstellbaren zahnärztlichen Behandlungsstuhles

Die Erfindung bezieht sich auf eine Einrichtung zur Steuerung des Sitzes oder der Rückenlehne eines zahnärztlichen Behandlungsstuhles, die motorisch in mehrere Positionen verstellbar sind, unter Verwendung von Istwertgebern und als elektronische Festwertspeicher ausgebildeten Sollwertgebern zur Bildung elektrischer Signale, die den Ist- bzw. Sollwert des zu verstellenden Objektes verkörpern sowie eines Komparators, der den Sollwert mit dem Istwert des zu verstellenden Objektes vergleicht und bei Vorhandensein einer Differenz je nach Vorzeichen der Differenz dem Antriebsmotor ein Signal zum Einschalten des Motors in die eine oder andere Drehrichtung liefert, wobei für das zu verstellende Objekt mehrere die einstellbaren Positionen verkörpernde Sollwertgeber vorhanden sind.

Bei einer bekannten solchen Steuereinrichtung sind als Soll- und Istwertgeber elektromechanische Geber in Form von Potentiometern vorhanden (DE—A—19 23 262 bzw. DE—A—22 51 737). Das Einstellen und Justieren der Potentiometer sowie die Programmierung der Sollwertgeber ist relativ aufwendig. Die elektromechanischen Istwertgeber neigen außerdem leicht zu Störungen.

Bei einer anderen bekannten Steuereinrichtung (DE—A—25 54 059) werden die Sollwerte zum Teil durch elektromechanische Sollwertgeber in Form von Potentiometern, zum Teil auch durch elektronische Sollwertspannungsgeber vorgegeben; Die elektronischen Sollwertspannungs-geber enthalten Digitalzähler, an deren Ausgang ein Widerstandsnetzwerk mit einer Vielzahl von Einzelwiderständen angeschlossen ist. Bei Durchlauf des Zählers erfolgt ein treppenförmiger Anstieg am Ausgang des Widerstandsnetzwerkes. Die hier entstehenden Ausgangssignale werden als analoge Signale (Spannung) einem ebenfalls analogen Vergleicher zugeführt und in konventioneller Weise mit analogen Werten aus einem den Istwert bildenden Potentiometer verglichen. In den analogen Vergleicher kann alternativ auch das analoge Signal aus dem elektromechanischen Sollwertgeber direkt eingegeben werden.

Eine solche Steuereinrichtung ist schaltungstechnisch relativ aufwendig, insbesondere wegen der Umwandlung der aus den Zählern der elektronischen Sollwertgeber erhaltenen digitalen Signale in analoge Signale. Die vorhandenen elektromechanischen Geber in Form der Potentiometer als Istwertgeber (und teilweise als Sollwertgeber) sind außerdem nicht ausreichend störsicher. Hinzu kommt, daß das Einstellen und Justieren der Istwertpotentiometer bei zahnärztlichen Behandlungsstühlen besonders schwierig und nur vom Servicetechniker durchzuführen ist.

Bei einer anderen bekannten Steuereinrichtung (DE—A—21 19 837) sind die Positionen der zu verstellenden Objekte (Rückenlehne, Stuhlsitz) durch Lochkarten festgelegt, die bei Bedarf in eine Übertragungseinrichtung eingegeben werden. Abgesehen davon, daß die Handhabung solcher Lochkarten verhältnismäßig umständlich ist, weil die jeweils gewünschte Karte erst aus einem Archiv geholt werden muß, sind solche Karten einem Verschleiß unterworfen. Die Übertragungseinrichtung zur Abtastung der jeweiligen Lochkarte stellt außerdem einen Störfaktor dar.

Der Erfindung liegt die Aufgabe zugrunde, eine Steuereinrichtung der eingangs genannten Gattung anzugeben, bei der keine Lochkarten od.dgl. erforderlich sind, die keine schwer zu justierenden und störanfälligen Teile enthält, und die vom Schaltungsaufwand her gesehen einfacher und betriebssicherer ist als bekannte solche Steuereinrichtungen.

Die gestellte Aufgabe wird gemäß der Erfindung dadurch gelöst, daß der Istwert des zu verstellenden Objektes durch einen mit dem zugehörigen Antriebsmotor gekuppelten Taktgeber gebildet ist, der Impulse abgibt, die von einem Zählglied aufgenommen, gezählt und je nach Drehrichtung des Antriebsmotors addiert oder subtrahiert werden, und daß ein Impulszähl-Komparator vorgesehen ist, der einerseits mit dem Ausgang des Zählgliedes und andererseits mit dem Festwertspeicher verbunden ist und den Zählerstand des Zählgliedes mit dem des Festwertspeichers vergleicht, derart, daß der Antriebsmotor über einen Schaltverstärker bei Vorhandensein einer Differenz je nach Vorzeichen der Differenz in der einen oder anderen Drehrichtung eingeschaltet und bei gleichem Zählerstand abgeschaltet wird.

Vorteilhafte Weiterbildungen und Ausgestaltungen der Erfindung sind in den Unteransprüchen enthalten.

Wesentliche Vorzüge der erfindungsgemäßen Steuereinrichtung sind in dem relativ geringen schaltungstechnischen Aufwand und in der direkten, reinen digitalen Ansteuerung und in dem direkten Vergleich der Soll- und Istwerte über einen Zählerstandskomparator zu sehen.

Die Verwendung von Positionszählern und Festwertgebern ist zwar auf dem Gebiet der Werkzeugmaschinensteuerung zur Positionierung eines verstellbaren Maschinenteils, z.B. des Werkzeugschlittens, relativ zu einem feststehenden Maschinenständer bekannt (DE—A—24 18 909). Die bekannte Vorrichtung dient dort aber dazu, die Positionierung des Maschinenteils dahingehend zu verbessern, daß ein Weiterschleppen von Zählfeldern bei Mehrfachpositionierung vermieden und damit die Genauigkeit der Positionierung ohne Synchronisation über die Ausgangsstellung erhöht wird. Zu diesem Zweck sind am verstellbaren Maschinenteil mehrere, über den gesamten Verstellweg verteilte und festen Positionen zugeordnete Festwertgeber angeordnet. Der Positionszähler wird durch eine von der Verstellung abhängige Anzahl von Zählimpulsen eines von der Stelleinrichtung des Maschinenteils gesteuerten Impulsgebers weitergeschaltet. Auf diese Weise wird eine Synchronisation des Positionszählers an fest vorgegebenen Verstellpositionen erzielt.

Ein Ausführungsbeispiel der Erfindung ist nachfolgend anhand der Zeichnung näher erläutert. Es zeigen:

Fig. 1 einen zahnärztlichen Behandlungsstuhl in schematischer Darstellung von der Seite,

Fig. 2 ein Prinzipschaltbild der Steuereinrichtung zur Verstellung der Sitzhöhe des in Fig. 1 gezeigten Stuhles.

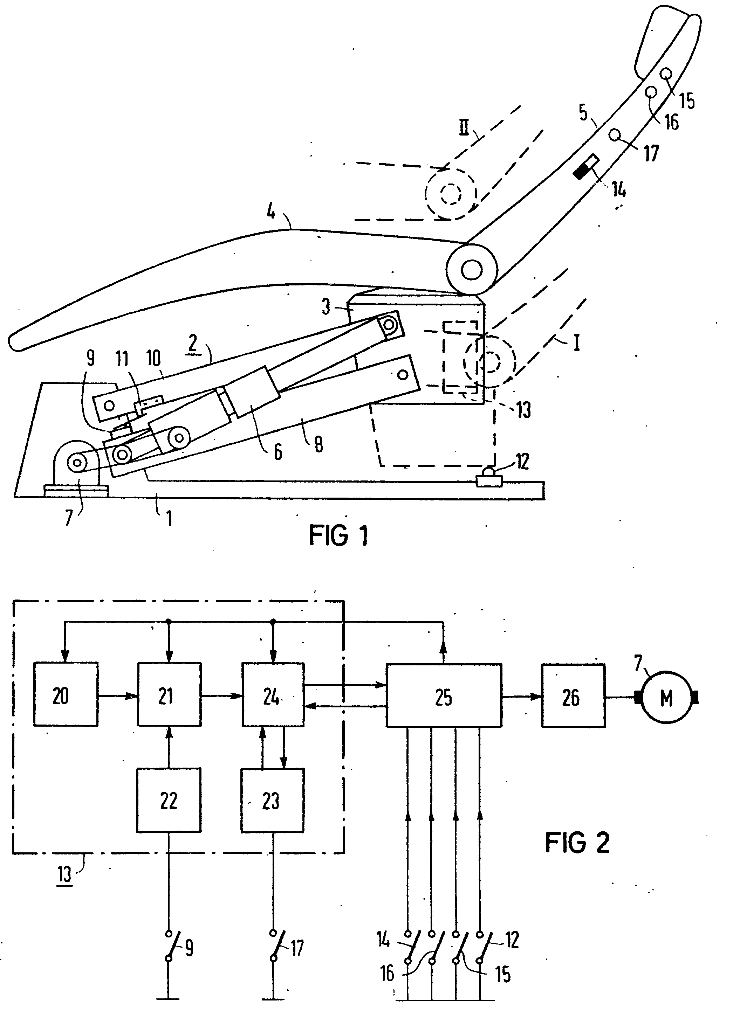

Die Fig. 1 zeigt in schematischer Darstellung einen zahnärztlichen Behandlungsstuhl von der Seite gesehen. Der Stuhl besteht im wesentlichen aus einem Basisteil 1, an dem ein Parallelogrammtragarm 2 angelenkt ist, dessen freies Ende in einem Träger 3 für einen Sitz 4 und eine Rückenlehne 5 gelagert ist. Sitz 4 und Rückenlehne 5 bilden zusammen das Stuhloberteil, welches mittels des Parallelogrammtragarmes 2 in der Höhe in die beiden gestrichelt angedeuteten Positionen I und II verstellt werden kann. Als Verstellvorrichtung ist ein elektromotorisch angetriebener Spindeltrieb 6 mit diagonal zwischen zwei Gelenkpunkten des Parallelogrammarmes 2 angeordneter Spindel vorgesehen. Der zugehörige Antriebsmotor 7 ist außerhalb des Parallelogrammtragarmes 2 in einem Gehäuse des Basisteils 1 angeordnet. Das Drehmoment des Motors 7 wird auf die Spindel über nicht näher bezeichnete Keilriemen und eine Zwischenwelle übertragen.

Der Parallelogrammtragarm 2 enthält zwei Gestängearme 8 und 10. Am unteren Gestängearm 8 ist ein Schalter 9 befestigt, der mittels einer am oberen Gestängearm 10 angeordneten Schaltnase 11 bei einer bestimmten Winkelstellung des Parallelogrammarmes und damit einer bestimmten Höhenlage des Sitzes 4 geschaltet wird. Der Schalter 9 dient, wie später noch einmal erläutert wird, zum Auslösen eines Korrekturvorganges. Mit 12 ist ein am Basisteil 1 angeordneter Notstoppschalter bezeichnet, der entweder bei Betätigung mit dem Fuß einer Bedienungsperson oder bei Auflage des Trägers 3 geschaltet wird.

Mit 13 ist eine in Fig. 2 näher erläuterte Programmsteuerung bezeichnet, welche die zur Speicherung sowie zum Abruf erforderlichen elektronischen Bauteile enthält.

Mit 14 ist ein Kippschalter bezeichnet, mit dem der Antriebsmotor 7 je nach Kipplage des Schalters in der einen oder anderen Drehrichtung eingeschaltet und damit eine Auf- oder Abwärtsbewegung des Sitzes eingeleitet werden kann. Der Schalter 14 hat in beiden Schaltrichtungen eine definierte Ruhelage, d.h.

nach Loslassen des Betätigungselements geht der Schalter stets in seine Ruhestellung zurück. In dieser Stellung ist der Schaltkreis des Antriebsmotors dann unterbrochen. Mit 15 und 16 sind Programmschalter bezeichnet, mit denen zwei verschiedene, fest eingestellte Positionen für die Sitzhöhe abgerufen werden können. Eine Programmeingabe erfolgt über den Schalter 17.

Die Fig. 2 zeigt das Prinzip der Programmsteuerung für einen Arbeitskreis, im vorliegenden Fall für die Höhenverstellung des Sitzes 4.

Der Istwert des zu verstellenden Objekts (hier also der Sitz 4) wird gebildet aus der Einschaltzeit und der Drehrichtung des Antriebsmotors 7. Die Einschaltzeit wird aus der am eingeschalteten Motor 7 anliegenden Netzspannung gewonnen. Ein Taktgeber 20 gibt entsprechend der Netzfrequenz des Motors Impulse an ein Zählglied 21, das, je nachdem, ob der Motor in der einen oder anderen Drehrichtung läuft und somit der Sitz angehoben oder gesenkt wird, die erhaltenen Impulse addiert oder subtrahiert. Wird beispielsweise der Motor in dem Drehsinn eingeschaltet, der ein Anheben des Sitzes bewirkt, so werden die Netzperioden addiert; umgekehrt werden beim Absenken des Stuhles die Netzperioden subtrahiert.

Nachdem sich beispielsweise durch Nachlauf oder Schlupf des Antriebsmotors durch unterschiedliche Belastungen usw. am Zählglied 21 Abweichungen einstellen können, die mit zunehmender Fahrzeit zu nicht zu vernachlässigbaren Fehlern führen können, ist ein Korrekturglied 22 vorgesehen, welches bei eingeschaltetem Korrekturschalter 9 den Zählerstand des Zählgliedes 21 korrigiert. Der Schalter 9 ist, wie in Fig. 1 dargestellt, zwischen der untersten und der obersten Stellung des Stuhles ortsfest an dem zu verstellenden Objekt angeordnet. Beim Überfahren eines bestimmten Punktes wird dieser geschlossen. Dadurch bekommt das Korrekturglied 22 einen Schaltimpuls, wodurch veranlaßt wird, daß der Zählerstand des Zählgliedes 21 mit dem des Korrekturgliedes 22 verglichen wird. Bei einem Abweichen des Zählerstandes wird das Zählglied 21 auf den Zählerstand des Korrekturgliedes 22 gebracht.

Zur Speicherung der verschiedenen Programme, die den verschiedenen Positionen der Sitzhöhe entsprechen (Sollwerte), ist ein elektronischer Festspeicher 23, z.B. ein EAPROM-Speicher, verwendet. Mit 24 ist ein Komparator bezeichnet, der die Istwerte aus dem Zähler 21 mit den Sollwerten des Speichers 23 vergleicht.

Mit 25 ist eine logische Verknüpfungsschaltung bezeichnet (Koinzidenzglied), welche bei Betätigung des Schalters 14 oder einer der Schalter 15 oder 16, mit denen die gespeicherten Programme abgerufen werden können, prüft, ob dieser Schalt- bzw. Steuerbefehl richtig ist. Liegen beispielsweise gegensätzliche Befehle für diesen Arbeitskreis vor, was beispielsweise durch das Einschalten der beiden Schalter 15 und 16, also das gleichzeitige Einsalten zweier unterschiedlicher Programme geschehen kann, dann verweigert das Koinzidenzglied 25 eine Befehlsweitergabe. Ist der Steuerbefehl hingegen eindeutig, so wird er über einen Schaltverstärker 26 an den Antriebsmotor 7 weitergegeben. Gleichzeitig wird der Taktgeber 20 und das Zählglied 21 aufgefordert, den Istwert zu bilden. Das Zählglied 21 läuft also so lange mit, wie der Motor 7 eingeschaltet ist.

Wird ein durch den Programmspeicher 23 festgelegtes Programm abgerufen, beispielsweise durch Betätigung des Schalters 15, so prüft zunächst der Komparator 24, ob zwischen dem Zählerstand des Zählgliedes 21 und dem Zählerstand des Speichergliedes 23 eine Differenz besteht. Ist eine solche vorhanden, erfolgt je nach Vorzeichen der Differenz über den Schaltverstärker 26 das Einschalten des Motors in der jeweils erforderlichen Drehrichtung. Stimmt der Zählerstand, also Ist- und Sollwerte, überein, so löst der Komparator 24 das Abschalten des Motors 7 aus. Das Abschalten des Motors 7 erfolgt auch, wenn die Notstopptaste 12 betätigt wird.

Zur Einspeicherung eines Programmes muß der Stuhl zunächst durch Handbedienung in die gewünschte Position gebracht werden. Dies geschieht durch Betätigen des Handschalters 14. Durch Betätigen der Programmeingebertaste 17 wird nunmehr der Programmspeicher 23 über den Komparator 24 zur Augnahme der Positionswerte vorbereitet. Wird danach eine der Programmtasten 15 oder 16 gedrückt, der das gewünschte Programm zugeordnet sein soll, übernimmt das Speicherglied 23 den vorliegenden Istwert aus dem Zählglied 21. In gleicher Weise kann das andere Programm eingespeichert werden, welches über den Schalter 16 abgerufen wird.

Der Einfachheit halber ist das Prinzip der Steuereinrichtung nur für die Sitzhöhenverstellung des Stuhles beschrieben. In gleicher Weise ist die Steuerung der Rückenlehnenneigung durchführbar.

**Patentansprüche**

1. Einrichtung zur Steuerung des Sitzes und/oder der Rückenlehne eines zahnärztlichen Behandlungsstuhles, die motorisch in mehrere Positionen verstellbar sind, unter Verwendung von Istwertgebern und als elektronische Festwertspeicher ausgebildeten Sollwertgebern zur Bildung elektrischer Signale, die den Ist- bzw. Sollwert des zu verstellenden Objektes verkörpern sowie eines Komparators, der den Sollwert mit dem Istwert des zu verstellenden Objekts vergleicht und bei Vorhandensein einer Differenz je nach Vorzeichen der Differenz dem Antriebsmotor ein Signal zum Einschalten des Motors in die eine oder andere Drehrichtung liefert, wobei für das zu verstellende Objekt mehrere die einstellbaren Positionen verkörpernde Sollwertgeber vorhanden sind, dadurch gekennzeichnet, daß der Istwert des zu verstellenden Objektes (4, 5) durch einen mit dem zugehörigen Antriebsmotor (7) gekuppelten Taktgeber (20) gebildet ist, der Impulse abgibt, die von einem Zählglied (21) aufgenommen, gezählt und je nach Drehrichtung des Antriebsmotors addiert oder subtrahiert werden, und daß ein Impulszähl-Komparator (24) vorgesehen ist, der einerseits mit dem Ausgang des Zählgliedes (21) und andererseits mit dem Festwertspeicher (23) verbunden ist und den Zählerstand des Zählgliedes (21) mit dem des Festwertspeichers (23) vergleicht, derart, daß der Antriebsmotor (7) über einen Schaltverstärker (26) bei Vorhandensein einer Differenz je nach Vorzeichen der Differenz in der einen oder anderen Drehrichtung eingeschaltet und bei gleichem Zählerstand abgeschaltet wird.

2. Steuereinrichtung nach Anspruch 1, dadurch gekennzeichnet, daß ein Zählerstandskorrekturglied (22) vorhanden ist, welches an einer definierten Stelle des zu verstellenden Objekts den dieser Lage entsprechenden Zählerstand mit dem des Zählgliedes (21) vergleicht und gegebenenfalls den zuletzt genannten Zählerstand korrigiert.

3. Steuereinrichtung nach einem der Ansprüche 1 oder 2, dadurch gekennzeichnet, daß der Ausgang des Komparators (24) mit einem Koinzidenzglied (25) verbunden ist, welches bei gleich zeitiger Eingabe zweier Steuersignale den Ausgang sperrt.

4. Steuereinrichtung nach Anspruch 4, dadurch gekennzeichnet, daß ein die Relativbewegung eines Verstellobjektes (4, 5) gegenüber einem festen Bezugspunkt des Stuhles erfassendes Schaltglied (9) vorhanden ist, welches bei Erreichen des Schaltpunktes dem Zählerstandskorrekturglied (22) ein Signal gibt.

5. Steuereinrichtung nach Anspruch 4, dadurch gekennzeichnet, daß ein Programmschalter (15) für den Festwertspeicher (23) sowie gegebenenfalls vorhandene Hand- oder Fußschalter (14) für eine manuelle Verstellung des Stuhles über das Koinzidenzglied (25) geführt sind.

6. Steuereinrichtung nach einem der Ansprüche 1 bis 5, dadurch gekennzeichnet, daß als Taktgeberfrequenz die Netzfrequenz des Antriebsmotors (7) verwendet ist.

**Revendications**

1 Dispositif pour réaliser la commande du siège et/ou du dossier d'un fauteuil pour le traitement dentaire, qui peuvent être réglés à l'aide d'un moteur dans plusieurs positions, moyennant l'utilisation de générateurs de valeurs réelles et de générateurs de valeurs de consigne, réalisés sous la forme de mémoires fixes électroniques, pour la formation de signaux électriques qui symbolisent la valeur réelle et la valeur de consigne de l'élément à déplacer, ainsi qu'un comparateur qui compare la valeur de consigne et la valeur réelle de l'élément à déplacer et, dans le cas de la présence d'une différence, délivre selon le signe de cette dernière, au moteur d'entraînement, un signal destiné à brancher le moteur dans l'une ou l'autre des sens de rotation, tandis qu'il est prévu plusieurs générateurs de valeurs de consigne délivrant les positions réglables, pour l'élément à déplacer, caractérisé par le fait que la valeur réelle de l'élément (4, 5) devant être déplacé est formée par un générateur de cadence (20) accouplé au moteur associé d'entraînement (7) et qui délivre des impulsions qui sont reçues, décomptées et additionnées ou soustraites, selon le sens de rotation du moteur d'entraînement, par un organe de comptage (21), et qu'il est prévu un comparateur de comptage d'impulsions (24) qui est relié d'une part à la sortie de l'organe de comptage (21) et d'autre part à la mémoire fixe (23) et qui compare l'état de comptage de l'organe de comptage (21) à celui de la mémoire fixe (23), de telle manière que, lors de l'existence d'une différence, le moteur d'entraînement (7) est branché par l'intermédiaire d'un amplficateur de commutation (26), selon le signe de ladite différence, dans un sens de rotation ou dans l'autre, et est débranché lorsque les états de comptage sont identiques.

2. Dispositif de commande suivant la revendication 1, caractérisé par le fait qu'il est prévu un organe (22) de correction de l'état de comptage, qui, pour une position définie de l'élément devant être déplacé, compare l'état de comptage correspondant à cette position à l'état de comptage de l'organe de comptage (21) et corrige éventuellement l'état de comptage indiqué en dernier lieu.

3. Dispositif de commande suivant l'une des revendications 1 ou 2, caractérisé par le fait que la sortie du comparateur (24) est relié à un organe à coïncidence (25) qui bloque la sortie lors de l'introduction simultanée de deux signaux de commande.

4. Dispositif de commande suivant la revendication 3, caractérisé par le fait qu'il est prévu un organe de commutation (9) détectant le déplacement relatif d'un élément à déplacer (4, 5) par rapport à un point de référence fixe du fauteuil et qui délivre un signal à l'organe (22) de correction de l'état de comptage, lorsque le point de commutation est atteint.

5. Dispositif de commande suivant la revendication 4, caractérisé par le fait qu'un commutateur de programmes (15) pour la mémoire fixe (23) ainsi que des commutateurs à main ou à pied (14) éventuellement présents pour un déplacement manuel du fauteuil sont raccordés par l'intermédiaire de l'organe à coïncidence (25).

6. Dispositif de commande suivant l'une des revendications 1 à 5, caractérisé par le fait qu'on utilise comme fréquences du générateur de cadence la fréquence du réseau du moteur d'entraînement (7).

## Claims

1. Device for controlling the seat and/or the backrest of a dentist's treatment chair which can be adjusted into a plurality of positions under motor control, employing actual value generators and, desired value generators in the form of electronic ROMs, to form electric signals which embody the actual value and desired value of the object which is to be adjusted, and a comparator which compares the desired value with the actual value of the object which is to be adjusted and in the event of a difference, in accordance with the sign of the difference, supplies the drive motor with a signal to switch on the motor in the one or the other direction of rotation, wherein a plurality of theoretical value generators which embody the adjustable positions are provided for the object which is to be adjusted, characterised in that the actual value of the object (4, 5) which is to be adjusted is formed by a pulse generator (20) which is coupled to the associated drive motor (7) and which emits pulses which are received by a counter (21), counted, and either added or subtracted in accordance with the direction of rotation of the drive motor, and that a pulse counting comparator (24) is provided which is connected on the one hand to the output of the counter (21) and on the other hand to the ROM (23) and which compares the count of the counter (21) with that of the ROM (23) in such manner that in the event of a difference, in accordance with the sign of the difference, via a switching amplifier (26) the drive motor (7) is switched on in the one or the other direction of rotation and in the event that the counts are identical the drive motor is switched off.

2. Control device as claimed in Claim 1, characterised in that a count correcting element (22) is provided which at a determinate point of the object to be adjusted compares the count corresponding to this position with that of the counter (21) and when necessary corrects the last mentioned count.

3. Control device as claimed in one of Claims 1 or 2, characterised in that the output of the comparator (24) is connected to a coincidence element (25) which blocks the output when two control signals are input simultaneously.

4. Control device as claimed in Claim 4, characterised in that a switching element (9) is provided which detects the relative movement of an object (4, 5) which is to be adjusted relative to a fixed reference point of the chair and which supplies the count correcting element (22) with a signal when the switching point is reached.

5. Control device as claimed in Claim 4, characterised in that a programme switch (15) for the ROM (23) and, where provided hand or foot switches (14) for manual adjustment of the chair, lead across the coincidence element (25).

6. Control device as claimed in one of Claims 1 to 5, characterised in that the mains frequency of the drive motor (7) is used as pulse generator frequency.

FIG 1

FIG 2